**Europäisches Patentamt**

(19) **European Patent Office**

**Office européen des brevets**

(11) Publication number : **0 394 410 B1**

## (12) EUROPEAN PATENT SPECIFICATION

(45) Date of publication of patent specification :
11.01.95 Bulletin 95/02

(51) Int. Cl.⁶ : **G02F 1/133**

(21) Application number : **89911739.4**

(22) Date of filing : **26.09.89**

(86) International application number :
**PCT/US89/04097**

(87) International publication number :
**WO 90/03593 05.04.90 Gazette 90/08**

(54) **ENHANCED BACKSCATTERING AND LIGHT TRANSMISSION IN A GUEST HOST DISPLAY.**

(30) Priority : **28.09.88 US 250435**

(43) Date of publication of application :
**31.10.90 Bulletin 90/44**

(45) Publication of the grant of the patent :
**11.01.95 Bulletin 95/02**

(84) Designated Contracting States :
**DE FR GB**

(56) References cited :
**EP-A- 0 156 615**
**WO-A-85/04262**
**GB-A- 2 019 026**
**JP-B-58 193 523**
**US-A- 4 211 473**
**US-A- 4 616 903**
**US-A- 4 707 080**
**US-A- 4 780 531**
**US-A- 4 810 063**

(56) References cited :
**JOURNAL OF APPLIED PHYSICS, vol. 60, no. 6, September 1986, pp. 2142-2148, Woodbury, NY, US ; P.S. DRZAIC: "Polymer dispersed nematic liquid crystal for large area displays and light valves"**

(73) Proprietor : **RAYCHEM CORPORATION**
**300 Constitution Drive**
**Menlo Park California 94025 (US)**

(72) Inventor : **WILEY, Richard**
**2178 Deodara Drive**
**Los Altos, CA 94022 (US)**
Inventor : **DRZAIC, Paul**
**2749 Cowper Street**
**Palo Alto, CA 94306 (US)**

(74) Representative : **Cross, Rupert Edward Blount et al**
**BOULT, WADE & TENNANT**
**27 Furnival Street**
**London EC4A 1PQ (GB)**

EP 0 394 410 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to liquid crystals, and more particularly to a guest host liquid crystal display having enhanced backscattering and light transmission.

Liquid crystals are used in a wide variety of devices, including visual display devices. The property of liquid crystals that enable them to be used, for example, in visual displays, is the ability of liquid crystals to transmit light on the one hand and to scatter light and/or absorb it (especially when combined with an appropriate dye) on the other, depending on whether the liquid crystals are in a de-energized or field-off state, or in an energized or field-on state. An electric field selectively applied across the liquid crystals may be used to switch between the field-off and field-on states.

There are three categories of liquid crystals, namely cholesteric, nematic and smectic. The present invention relates in the preferred embodiment described hereinafter to the use of liquid crystal material which is operationally nematic. By "operationally nematic" is meant that, in the absence of external fields, structural distortion of the liquid crystal is dominated by the orientation of the liquid crystal at its boundaries rather than by bulk effects, such as very strong twists (as in cholesteric material) or layering (as in smectic material). Thus, for example, a liquid crystal material including chiral ingredients which induce a tendency to twist but which cannot overcome the effects of the boundary alignment of the liquid crystal material would be considered to be operationally nematic.

A more detailed explanation of operationally nematic liquid crystal material is provided in U.S. Patent No. 4,616,903.

Reference may also be made to U.S. Patent 4,435,047.

Nematic curvilinear aligned phase (NCAP) liquid crystal and devices using NCAP liquid crystal are also described in the above-identified U.S. Patent No. 4,435,047. An NCAP film may comprise a containment medium containing plural volumes of operationally nematic liquid crystal. The plural volumes may be discrete or interconnected capsules. As described in U.S. Patent No. 4,707,080, the interconnecting channels or passageways may also contain liquid crystal material.

A functional NCAP liquid crystal device may consist of NCAP liquid crystal sandwiched between two electrode-coated substrates. A voltage source may be connected between the electrodes to selectively apply an electric field across the liquid crystal material. A pleochroic dye may be present with the liquid crystal material to provide substantial attenuation by absorption in the field-off state but to be substantially transparent in the field-on state.

An optical reflector may be located to the rear of the NCAP film. The reflector may be colored. Reflection by the device will be a function of whether there is an electric field applied across the liquid crystal material.

The optical performance of such a guest host display may be measured by comparing its luminance and color in the field-on and field-off states. The display's luminance (Y) is a quantitative measure of the intensity of light leaving the display surface. Its brightness is closely related to luminance but is not quantitative. The display's color may be represented by the Cartesian coordinates (x,y) on a 1931 C.I.E. chromaticity diagram.

Ideally, in the field-off state, the display's luminance should be low and its color as close to a colorless, neutral state as possible. In the field-on state, just the opposite is preferably true. The display's luminance should be high, and its color, which is dependent upon the reflector's color, should be very saturated.

As is known, the display may be made darker (lower luminance) in the field-off state by using a high concentration of dye or a thicker liquid crystal film. However, as a result for a given voltage, in the field-on state, the display is also darker and its color less saturated. Thus, although the optical performance of the display may be improved in the field-off state, it is no better, indeed it is worse, in the field-on state.

A potential solution to this problem has been the use of higher performance pleochroic dyes: i.e. dyes with a higher order parameter. However, even with such dyes there is a direct trade off between the optical performance in the field-on and field-off states. That is, the optical performance in the field-off state cannot be improved without adversely effecting that performance in the field-on state and vice-a-versa. Thus, there is a limitation on the degree of color contrast and luminance that may be obtained in the field-on and field-off states.

EP-0156615 discloses a liquid crystal apparatus which comprises liquid crystal material encapsulated within a containment medium. The size of the volumes containing the liquid crystal material is disclosed as being 1 to 10 microns. The liquid crystal apparatus includes a pleochroic dye contained in the liquid crystal material.

WO85/04262 discloses a similar encapsulated liquid crystal apparatus which gives no indication of the size of the volumes within the containment medium but in one example gives a concentration for the pleochroic dye of 1.5% by weight.

GB 2019026 discloses a liquid crystal display wherein liquid crystal material is contained between two substrates. The liquid crystal material contains a pleochroic dye in the proportion 0.5% to 2.0% by weight according to the layer thickness and degree of absorption desired. This document discloses a typical example of 1.7% by weight for a liquid crystal layer thickness of 12 microns.

An article by Paul S. Drzaic in the Journal of Applied Physics Volume 60 Part 6 pages 2142 to 2148 (1986) discloses a liquid crystal apparatus comprising a containment medium, a birefringent liquid crystal material which at least one of scatters and absorbs light and which in a response to a prescribed input reduces the amount of such scattering or absorption; and a pleochroic dye contained in the liquid crystal material that conforms with the structure thereof, the liquid crystal material being dispersed in plural volumes in the containment medium wherein the volumes have a size from 0.5 to 2.5 microns and the thickness of the containment medium is between 8 and 18 microns. However, no consideration is given to enhancing back scattering in the field-off state while also enchancing light transmission in the field-on state.

Accordingly, an object of the present invention is to enhance the optical performance of a liquid crystal display wherein the display's field-off and field-on performances are more independent of each other.

A more specific object of the present invention is to provide a guest host display that has enhanced backscattering in the field-off state but enhanced light transmission in the field-on state.

Yet another object of the present invention is to provide a guest host display that has improved color contrast and luminance.

According to one aspect the present invention provides a liquid crystal apparatus comprising: a containment medium, a birefringent liquid crystal material which at least one of scatters and absorbs light and which in response to a prescribed input reduces the amount of such scattering or absorption; and a pleochroic dye contained in said liquid crystal material that conforms to the structure thereof; said liquid crystal material being dispersed in plural volumes in said containment medium wherein said volumes have a size from 0.5 to 2.5 microns, the thickness of said containment medium being between 8 and 18 microns; characterised in that the concentration of said dye in said liquid crystal material is between 0.6% and 1.2% and the difference between the ordinary and extraordinary indices of refraction of said liquid crystal material is greater than or equal to 0.23. The apparatus has enchanced backscattering in the field-off state and enhanced light transmission in the field-on state.

In another aspect the present invention provides a method of making a liquid crystal apparatus, comprising: forming a plurality of volumes of a birefringent liquid crystal material and a pleochroic dye that conforms to the structure thereof in a containment medium such that the walls of said volumes produce a distorted alignment of said liquid crystal material which in response to such alignment at least one of scatters and absorbs light and which in response to an electric field reduces the amount of such scattering or absorption wherein said volumes have a size of between 0.4 and 2.5 microns and forming said containment medium to have a thickness of between 8 and 18 microns, characterised by the steps of selecting said liquid crystal material such that the difference between its ordinary and extraordinary indices of refraction is greater than or equal to 0.23 and selecting the concentration of said pleochroic dye in said liquid crystal material to be between 0.6% and 1.2%.

The pleochroic dye may be a blue dye and a fluorescent reflector may be disposed on a non-viewing side of the containment medium. This configuration provides superior color contrast between the field-on and field-off states. The color contrast is improved since the blue dye preferentially rejects the short wavelengths of light that would otherwise excite the fluorescent reflector. Additionally, in this configuration, a lower concentration of blue dye may be utilized, thereby increasing light transmission in the field-on state.

Examples of the present invention will now be described with reference to the drawings, in which:-

Figure 1 is a schematic view illustrating the operation of a prior art liquid crystal apparatus.

Figure 2 is a schematic view illustrating the operation of a liquid crystal apparatus in accordance with one embodiment of the present invention.

Figure 3 is a schematic view illustrating an apparatus made in accordance with one embodiment of the present invention in the absence of an electric field.

Figure 4 is a schematic view illustrating an apparatus made in accordance with one embodiment of the present invention in the presence of an electric field.

Figure 5 is a graphical representation of the reflectance spectra for three different fluorescent reflectors.

Figure 6 is a graphical representation of the fluorescence spectrum for a yellow fluorescent reflector.

Figure 7 is a graphical representation of the reflectance spectra of different NCAP films.

Figure 8 is a graphical representation of the reflectance spectrum of an NCAP film in the field-off and field-on states.

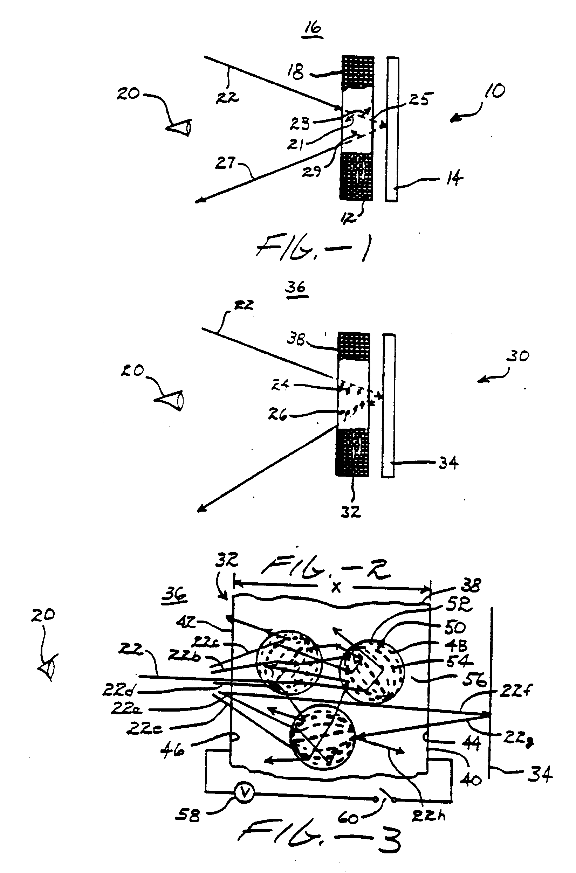

Referring now to the drawings, wherein like reference numerals for like components are utilized throughout the drawings, attention is first directed to Figure 1. Figure 1 shows a liquid crystal display indicated generally by reference numeral 10. The display may be observed by an observer 20 at a viewing side 16 thereof.

The display includes a NCAP liquid crystal cell 12 disposed in front of a color reflector 14. The liquid crystal cell. includes a liquid crystal material 18 having a pleochroic dye mixed therewith. The optical characteristics of the liquid crystal material are a function of whether a prescribed input is applied across the liquid crystal material. The prescribed input may be an electric field. The application or not of the electric field creates the display that is observable by observer 20.

In the field-off state, the dye and liquid crystal molecules are randomly aligned inside the volumes or capsules, and interconnecting passages, if present, of the containment medium. Ambient light, represented by light beam 22, is absorbed and isotropically scattered. Isotropic scattering is described in U.S. Patent 4,606,611.

The light that is absorbed by the dye may be represented by light beam 23. Light that is forward scattered through the cell is represented by light beam 25. That light is reflected by reflector 14 back toward the cell where it will be forward scattered through the cell as light beam 27 and absorbed as light beam 29. Some of the incident light may also be backscattered as represented by light beam 21. The light that observer 20 sees ($B_{off}$) is a function of the light absorbed and scattered by the cell, which in turn determines the luminance (Y) and color (x,y) of the display.

In the field-on state, an electric field is applied across the liquid crystal material in the cell. The ambient light 22 then passes through the cell and is not extensively absorbed by the dye, since the dye is now aligned parallel to the incoming light. As such, more of the ambient light reflects off and is colored by color reflector 14. This light may be represented as $B_{on}$ and is identified by the ray path shown by light beams 22, 25 and 27. As discussed, the optical performance of the display is evaluated by comparing $B_{off}$ and $B_{on}$, and the contrast ratio of the display is the ratio of $B_{on}$ to $B_{off}$.

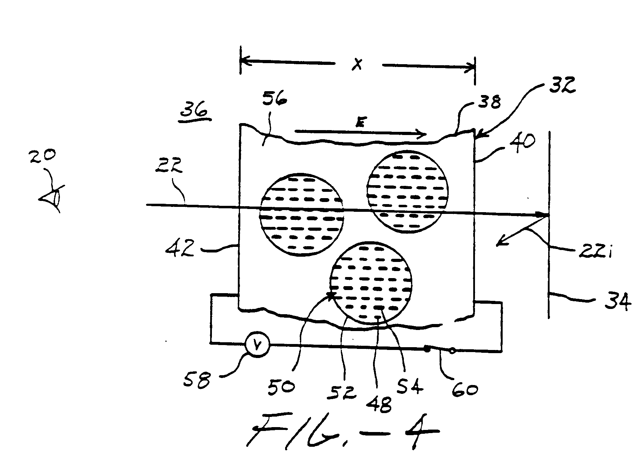

Figure 2 schematically represents the operation of display 30 of one embodiment of the present invention. This display includes a NCAP liquid crystal cell 32 disposed on a viewing side 36 in front of a reflector 34. The liquid crystal cell includes a NCAP liquid crystal material 38 having a pleochroic dye mixed therein. As will be explained in detail below, liquid crystal material 38 has been especially formulated to enhance the cell's backscattering and light transmissive properties. Thus, incident light, light beam 22 (not coming off the display at the glare angle) will not only be forward scattered by the liquid crystal material in the field-off state but will also be extensively backscattered, as represented generally by light beams 24 and 26. Additionally, more light will be transmitted through the display in the field-on state.

Such enhanced backscattering and light transmission provide a display that produces improved color, luminance and contrast between the field-on and field-off states. This enhancement in performance may be achieved with 15-33% less dye and lower operating voltages.

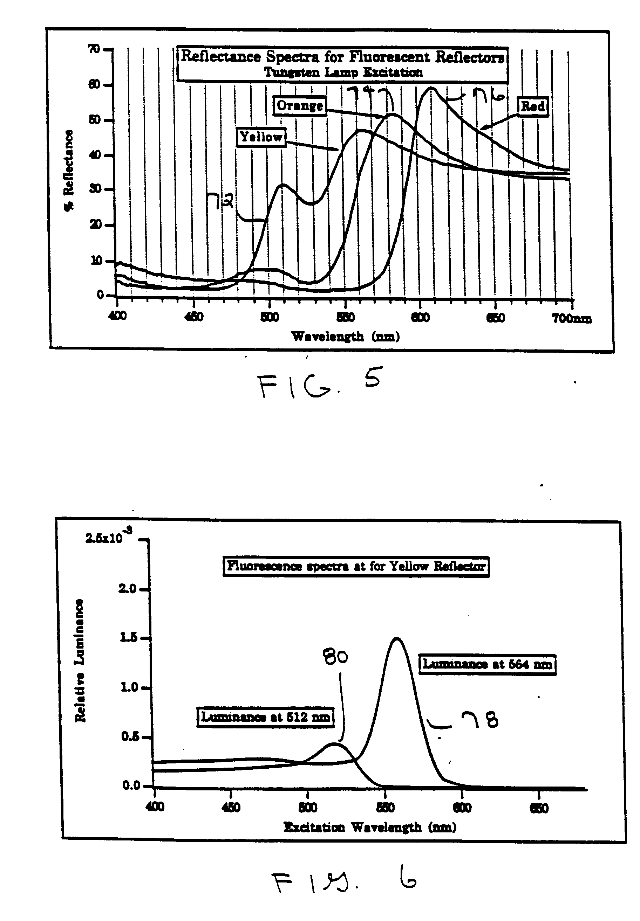

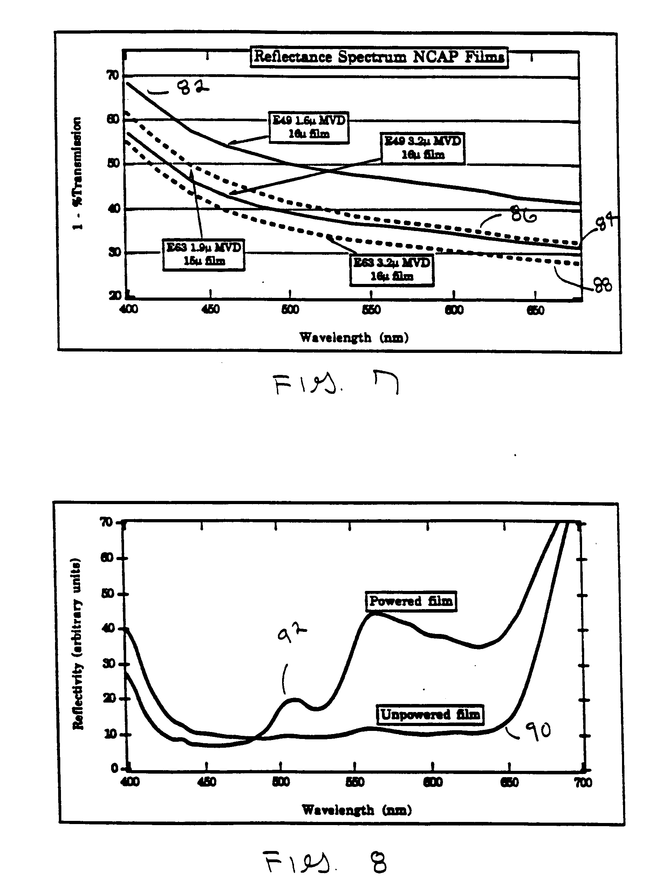

To explain more fully and as shown in Figures 3 and 4, liquid crystal cell 32 includes NCAP liquid crystal material 38 supported by and between substrates 40 and 42. The substrates have respective electrodes 44 and 46 formed thereon. Mounting substrates 40 and 42, and electrodes 44 and 46 are optically transparent so that the liquid crystal cell is capable of controlling the transmission of light therethrough in response to an electric field applied across the liquid crystal material. The substrates may be a polyester material (PET) and the electrodes may be formed in any conventional manner from, e.g., indium tin oxide (ITO).

The NCAP liquid crystal material 38 includes liquid crystals 48 more or less contained within the confines of the interior volumes 50 of capsules 52. The volumes of the liquid crystals are dispersed throughout a three-dimensional matrix or containment medium 56. This matrix is preferably a latex containment medium of the type disclosed and described in EP-A-0156615.

As noted, the volumes of liquid crystal may be discrete or interconnected. The interconnecting passageways may also contain liquid crystals. All of the aspects and features of the present invention vis-a-vis individual, unconnected capsules are applicable to a matrix system wherein capsules are interconnected by one or more interconnecting passages. For the sake of convenience, the matrix is illustrated in only two dimensions and interconnecting passageways are not shown.

Preferably, liquid crystal 48 is nematic or operationally nematic liquid crystal material having a positive dielectric anisotropy. The liquid crystal has mixed therewith a pleochroic dye 54. The dye alignment follows the alignment of the liquid crystal 48.

A voltage may be applied to electrodes 44 and 46, and hence across the liquid crystal material from an AC or DC voltage source 58. The voltage source is connected to the electrodes by electrical leads and through a selectively closable switch 60. When the switch is closed, a voltage is applied across the electrodes causing liquid crystal molecules 48 and dye 54, which follows the orientation of the liquid crystal molecules, to align with the electric field "E" (Figure 4), thereby becoming optically transmissive. When the switch is opened and no voltage is applied (Figure 3), the liquid crystal material and dye scatter and absorb light as will be discussed below.

The index of refraction of the encapsulating or containment medium 56 and the ordinary index of refraction of liquid crystal 48 should be matched as much as possible when in the field-on state in order to avoid optical distortion due to refraction of incident light passing therethrough. This refractive index match should be within 0.05 refractive index units, and preferably within 0.03 refractive index units. However, when the liquid crystal is in the field-off state there should be a difference in the indices of refraction at the boundary of the liquid crystal and the wall of capsule 52; i.e., the extraordinary index of refraction of the liquid crystal should be greater than the index of refraction of the encapsulating medium. This causes refraction at the interface or boundary of the liquid crystal and the containment medium, and thus further scattering. The existence of such different indices of refraction is known as birefringence.

As long as the ordinary index of refraction of the liquid crystal material is closer to the index of refraction of the containment medium, than is the extraordinary index of refraction, a change in scattering will result when going from the field-on to field-off conditions, and vice versa.

Increased backscattering and forward scattering of incident light by the liquid crystal in the field-off state generally results when the difference ($\Delta$N) between the ordinary and extraordinary refractive index of the nematic 48 and the refractive index of the containment medium 56 is high. However, since it is generally desired to match the ordinary refractive index of the nematic with the refractive index of the containment medium, the birefringence of the nematic will be a good indicator of the ability of a film containing that nematic to scatter light. Thus, the liquid crystal utilized in the apparatus of the present invention should have the highest possible $\Delta$N. Also, it should possess an ordinary refractive index that approximately matches the refractive index of the containment medium. A preferred range for $\Delta$N is on the order of between .23 and .30, and a more specific range that is suitable is between about .23 and .26. An example of a liquid crystal with a high $\Delta$N is Product No. E49 ($\Delta$N=.251) available from BDH, Ltd., Poole, England.

Since the difference between the extraordinary refractive index of the liquid crystal and the refractive index of the containment medium is the proper figure of merit, it is possible that a lower birefringent ($\Delta$N) liquid crystal could scatter more strongly than a higher birefringent material if the difference between the extraordinary refractive index and the refractive index of the containment medium is larger in the case of the lower birefringent nematic than for the higher birefringent nematic. Such a case may arise if two different nematics have different solubility levels in the containment medium. In general, absorption of a nematic into the containment medium will cause an increase in the refractive index of the containment medium. Thus, a lower birefringent nematic with a low solubility in the containment medium could in principle scatter more effectively than a high birefringent nematic with a high solubility in the containment medium. However, if solubility effects for two such liquid crystals are similar, then the birefringence will be a good indicator of the films' ability to scatter light.

The capsule or volume size may also be adjusted to increase backscattering and forward scattering in the field-off state. The capsules are generally spherical and have a diameter of between about .5 and 3.0 microns, preferably between about .5 and 2.5 microns, more preferably between about 1.0 and 2.0 microns, still more preferably between about 1.3 and 1.8 microns, and most preferably about 1.5 microns.

In NCAP guest host displays of the type shown in Figure 1, the capsule diameter has been on the order of about 3-4 microns. As noted, reducing the capsule or particle size to, e.g., about 1.5 microns increases forward scattering and backscattering in the field-off state.

In order to enhance optical performance of the display in the field-on state it has been found that the thickness "x" of the liquid crystal layer should be in between about 8 and 18 microns, and more preferably between about 13 and 16 microns. Heretofore, the thickness of this layer as used in NCAP guest host displays was on the order of about 20 microns. By decreasing that dimension, the display has enhanced optical performance in the field-on state as light transmission through the cell is increased. This enhanced optical performance comes about because, given a fixed operating voltage, decreasing the cell dimension increases the field across the film. This increased field leads to improved alignment of the nematic within the film, increasing the transmission through the cell by reducing both the absorbance and the scattering of the film. That is, the luminance (Y) of the display should be higher and its color (x,y) closer to that of the true color of the reflector.

As mentioned, the alignment of dye 54 follows the alignment of liquid crystal 48. Therefore, when the liquid crystal structure is in distorted alignment, as illustrated in Figure 3, the dye will provide a relatively substantial amount of light absorption. However, when the liquid crystal is in parallel alignment, as shown in Figure 4, light absorption by the dye will be minimized. As the magnitude of the electric field is increased or decreased, the amount of distortion of the liquid crystal material will vary, and the amount of absorption by the dye will also vary. In NCAP guest host displays of the type illustrated in Figure 1, the dye has been present on the order of about 1.5% of the amount of liquid crystal. By reducing this concentration to an optimal range of between about .8% and 1.2% of the amount of liquid crystal, field-on optical performance is improved as mentioned above. A concentration of dye in liquid crystal on the order of about .6% to 1.2% is also suitable.

The use of a high $\Delta$N liquid crystal material greater than or equal to .23, and a capsule size on the order of about 1.5 microns results in enhanced optical performance in the field-off state. That is, the luminance (Y) of the display is low, and the color of the display (x,y) is closer to the color, neutral state desired.

By reducing the dye concentration to between about .8% and 1.2% of the liquid crystal material and de-

EP 0 394 410 B1

creasing the thickness or cross-sectional dimension "x" of the liquid crystal layer to between about 13 and 16 microns, light transmission through the cell in the field-on state is increased. Thus, the performance of the display in the field-on state is improved.

Importantly, adjusting the capsule size and ΔN of the liquid crystal as discussed improves the display's field-off performance without substantially degrading its field-on performance. Similarly, adjusting the dye concentration and cell thickness as described improves field-on performance without substantially adversely effecting the field-off performance. Thus, there is no longer a direct trade off in performance between the field-on and field-off states; i.e., the optical performance in one state may be enhanced without adversely affecting the performance in the other state.

Figure 3 illustrates the operation of the display in the field-off state. As shown, ambient light, light beam 22, impinging upon liquid crystal cell 32 will be forward scattered, backscattered and absorbed. More specifically, incident light, such as light beams 22a and 22b, will be absorbed by dye 54 in the capsule volumes. Other light, such as light beams 22c, 22d, and 22e, will be backscattered, i.e., scattered back towards observer 20 on viewing side 36 of the display. Still other light such as light beam 22f will pass through liquid crystal cell 32 and be reflected by reflector 34 as light beam 22g back into the cell where it may be backscattering (light beam 22h) back towards reflector 34. Due to the use of a high ΔN liquid crystal material and relatively small capsule diameters, the backscattering effect is enhanced.

In the field-on state, as illustrated in Figure 4, switch 60 is closed and the electric field "E" is applied across the liquid crystal material of the cell. Thus, liquid crystal molecules 48 and dye 54 align parallel to the electric field. In this condition, most of the ambient light, light beam 22, passes through the cell to reflect off the surface of reflector 34 as light beam 22i. In comparison to guest host designs utilized heretofore, more light passes through the cell since the dye concentration is lower and the cell thinner. This results in an increase in brightness and color purity in the field-on state.

Table 1 below is a comparison of a guest host NCAP display used heretofore (Figure 1) with the display of one embodiment of the present invention (Figure 2). The prior display (Figure 1) had the following parameters: cell thickness = 20 microns, dye concentration = 1.5%, ΔN = .22, capsule size = 3 to 4 microns. The display of the embodiment of the invention (Figure 2) had these parameters: cell thickness = 15 microns, dye concentration = 1.0%, ΔN = .26, and capsule size = 1.5 microns.

## TABLE 1

| | Figure 1 Design | Figure 2 Design |
|---|---|---|
| **% Light Transmission** | | |
| (single pass) | | |
| Off | 20% | 16% |
| On (40Vac) | 50% | 58% |
| On (60Vac) | 58% | 68% |
| **% Luminance** | | |
| (double pass) | | |
| Off | 5.5% | 7.5% |
| On (40Vac) | 18% | 22% |
| On (60Vac) | 20% | 24% |
| **Color Purity** | | |
| Off | 30% | 18% |
| On (40Vac) | 60% | 70% |
| On (60Vac) | 68% | 75% |
| **Color Difference** | | |
| (1976 CIE-LUV) | | |
| @ 40Vac | 45 | 55 |
| @ 60Vac | 50 | 65 |

As can be seen from Table 1, with the display of the embodiment of the present invention, the transmission

6

of light through the cell in the field-off state was decreased, while light transmission in the field-on state was increased. Although the luminance of the display of the embodiments of the present invention was higher in both the field-on and field-off states, the color in the field-off state was closer to the desired color neutral condition. The display's color purity or saturation was also better in the field-on state. Also the color difference or contrast between the field-on and field-off states was improved.

The reflector 34 of display 30 may be a colored, fluorescent reflector. If so, as will be explained below, an additional effect occurs.

Fluorescent dyes used in fluorescent reflectors work by absorbing short wavelength light, e.g., blue and ultraviolet light (380 to 500 nanometers (nm)), and re-emitting that light at longer wavelengths, i.e., typically yellow, orange, and red light ( 500 to 700 nm). In this way, fluorescent materials often seem brighter than their surroundings through this ability to convert light from one color to another. Fluorescent reflectors exist that can be excited at wavelengths shorter than 380 nanometers. In the context of embodiments of the present invention, such reflectors are less useful since an ultraviolet absorbing filter that absorbs light of wavelengths less than 380 nanometers may be incorporated into the display. However, a choice of a different UV-absorbing filter or its removal would extend the choice of fluorescent reflectors to those that can be excited in the wavelength range less than 380 nanometers.

This fluorescent effect is shown in Figures 5 and 6. Figure 5 illustrates the reflectance spectra for three different reflectors used in NCAP displays, using white light to illuminate the displays. Specifically, curves 72, 74 and 76 represent the reflectance spectrum for yellow, orange and red fluorescent reflectors, respectively. It is seen in Figure 5 that each color has a major peak (or peaks) where light is preferentially reflected. Figure 6 shows the reflectance of the yellow reflector, monitored at the two peak luminance wavelengths, i.e., 564 nm (curve 78) and 512 nm (curve 80). It is seen from Figure 6 that even if the reflector is illuminated with light at shorter wavelengths than 564 nm, it still emits light. However, light at wavelengths longer than 564 nm does not excite the film at all at 564 nm. Similar effects are seen for the peak at 512 nm.

As described above, NCAP films scatter and/or absorb light, and can reflect light before it reaches a back reflector. For a fluorescent reflector, this property also prevents short wavelength light from reaching the reflector, and exciting the fluorescent color. Thus, the apparent brightness of the unpowered film is reduced using fluorescent reflectors, as the scattering and absorbing effects inhibit the fluorescent effect of the reflector.

This reflectance property of different NCAP films is shown in Figure 7. Figure 7 plots 1-% transmission for undyed E49 and E63 (liquid crystal material product No. E63 available from BDH. Ltd., Poole, England) films. These spectra are measured using an integrated sphere to measure the diffuse transmission through the films; this data was then used to calculate 1-%transmission. This quantity is not exactly equal to percent reflection, due to some small absorbance by the ITO electrode layers. Figure 7 also contains information concerning the film thickness and the mean volume diameter (MVD) of the capsules of the containment matrix. For example, curve 82 represents an NCAP film utilizing the E49 liquid crystal material discussed above wherein the MVD is 1.6 microns($\mu$) and the film thickness is about 16$\mu$.

As can be seen from Figure 7, for the small droplet E49 film (curve 82), 40% to 70% of the light impinging on the film in the field-off state is scattered (forward and backscattered) and/or absorbed. Additionally, this effect is much larger in the short wavelength region of the spectrum (around 400nm) than in the long wavelength region (around 700 nm). This is exactly the spectral region which should be rejected in the unpowered film, since these wavelengths excite the fluorescent reflector as described above.

The exact reflectance spectrum of a NCAP film is dependent on the liquid crystal extraordinary refractive index, the containment medium refractive index, the liquid crystal droplet size, and the film thickness. The E49 film (curve 82) with 1.6$\mu$ MVD droplets is a preferred material for NCAP guest-host films. In comparison, Figure 7 also shows the reflectance spectra of an E49 film with a larger droplet diameter (curve 84), and two films with a different liquid crystal (E63) at two different mean droplet diameters (curves 86 and 88). The E63 mixture possesses lower birefringence ($\Delta N=.227$) than the E49 mixture ($\Delta N=.251$), and thus does not scatter light as effectively. As can be seen with both types of liquid crystals, smaller droplets are more efficient at scattering light than larger droplets. Measurement of the difference between the extraordinary refractive index of the nematic and the refractive index of the containment medium in this case shows a difference of 0.279 for the E49 mixture and 0.240 for the E63 mixture.

Figure 8 illustrates the effect of scattering on the reflectance spectrum of an NCAP display. The film includes the E49 liquid crystal with the black pleochroic dye M778 at a concentraiton of 1% by weight. This dye is available from Mitsui Toatsu, Inc., Tokyo, Japan. The capsules have a MVD of 1.7$\mu$, and the film thickness is about 18$\mu$. In the unpowered state (curve 90), it is seen that the film is dark and neutral colored. The luminance is also low, and relatively flat over the 400-700 nm range. When the film is powered (curve 92), however, two effects appear. First, the luminance of the film increases dramatically as the dye absorbance decreases. Secondly, the film becomes colored yellow, because of the yellow fluorescent reflector, as is evident from the shape of the spectrum as shown by curve 92. This change in brightness and color results in a large color difference in the display between the powered and unpowered states.

As discussed, in the field-off state, the NCAP film minimizes the excitation of the fluorescent reflector by scattering and absorbing the shorter wavelengths of light, i.e. between about 380 and 500 nm. The result, as noted, is an improvement in color contrast between the field-on and field-off states.

The color contrast of such a display may be further improved by using a blue, pleochroic dye. The color contrast is improved for two reasons. First, in the field-off state, the backscatter of the film prevents a large fraction of the light from reaching the rear reflector. Thus, much of the reflection from the device will be the color of the pleochroic dye in the film (e.g., blue). Second, since the reflector is chosen to be a complementary or near complimentary color of the blue dye, i.e. yellow, red or orange, light that does reach the reflector and is reflected is preferentially absorbed by the blue dye as it passes through the NCAP film layer.

The NCAP display incorporating a blue dye would thus appear blue in color in the off state and have a green, yellow, orange, or red color in the on state, depending on the reflector utilized.

Exemplary blue dyes that may be utilized in the display of the present invention include M-137 and M-483 (available from Mitsui Toatsu, Inc., Tokyo, Japan), B-1 and B-3 (available from Hoffmann-La Roche Ltd., Basel, Switzerland), and D-102 (available from BDH Ltd., Poole, England). These dyes are oil soluble to provide solution thereof with the liquid crystal. Also, they are not subject to absorption by the water phase or polymer phase to insure that they will not be absorbed by the containment medium or any carrier medium during the manufacturing process. The dyes preferably are also photo-stable so that they do not fade significantly when exposed to sunlight. As such, they are suitable for use in outdoor displays. Preferably, the concentration of blue dye is between about 0.6% and 2.0% and more preferably between about 1.0% and 1.5%.

### Example 1

A method may comprise mixing together 67.6 grams of the liquid crystal E49 (available through BDH Ltd., Poole, England) with 1.01 grams of pleochroic blue dye M-137 (available through Mitsui Toatsu, Inc., Tokyo, Japan) with stirring at a temperature between 50°C and 100°C until the dye is completely dissolved into the liquid crystal. The $\Delta N$ of the liquid crystal material at 25°C is 0.261, and its ordinary refractive index is 1.527. Thereafter, 0.04 grams of surfactant IGEPAL CO-610 (available through GAF, Inc., Wayne, New Jersey) can be added to the mixture and blended for 2-3 minutes at 500 RPM. A mixer suitable for this and subsequent mixing is a Dyna-Mix variable speed rotary mixer (available from Fisher Scientific Inc., Pittsburgh, Pennsylvania). About 0.02 grams of the surfactant DOW-5098 (available from Dow Chemical, Midland, Michigan) may also be added during the emulsification for defoaming. Thereafter, 41.6 grams of Neorez R-967 (available through Polyvinyl Chemicals, Wilmington, Massachusetts) containing 40% of latex particles by weight can be added into the emulsified mixture and mixed for one minute at about 6000 RPM until the mixture is homogeneous. The preferred mean volume diameter of the capsules is about 1.5 microns, as determined using a Coulter Counter Model TAII particle size analyzer (available from Coulter Electronics, Inc., Hialeah, Florida). The mixture may be degassed and 0.12 grams of the crosslinking agent CX-100 (available through Polyvinyl Chemicals) may be added with slow mixing. This material may then be layered with a 0.003″ Bird doctor blade or other suitable means onto an appropriate electrode-coated substrate and dried. Additionally, a second electrode-coated substrate may be laminated to the coating to make an operating device.

The index of refraction of the containment medium is about 1.482 prior to contact with the liquid crystals, but rises to about 1.509 as the liquid crystal becomes partially absorbed by the containment medium. Due to this increase, the refractive index of the containment medium becomes reasonably well-matched to the ordinary refractive index of the E49 nematic (1.535). An exact match of refractive indices is not necessary for these display devices. In this case, the difference in refractive index between the containment medium and ordinary refractive index of the nematic of 0.026 results in sufficient clarity in the powered film to easily discern the colored reflector behind the NCAP film.

Although certain specific embodiments of the invention have been described herein in detail, the invention is not to be limited only to such embodiments, but rather only by the appended claims.

### Claims

1. A liquid crystal apparatus comprising: a containment medium (56), a birefringent liquid crystal material (18, 38) which at least one of scatters and absorbs light and which in response to a prescribed input reduces the amount of such scattering or absorption; and a pleochroic dye (54) contained in said liquid crystal material (18, 38) that conforms to the structure thereof; said liquid crystal material (38) being dispersed in plural volumes (50) in said containment medium (56) wherein said volumes (50) have a size from 0.5 to 2.5 microns, the thickness of said containment medium (56) being between 8 and 18 microns, characterised in that the concentration of said dye (54) in said liquid crystal material (18, 38) is between 0.6% and 1.2% and the difference between the ordinary and extraordinary indices of refraction of said liquid crystal material (18, 38) is greater than or equal to 0.23.

2. The apparatus of Claim 1 characterised by a reflector means (34) disposed on a non-viewing side of said containment medium (56).

3. The apparatus of Claim 2 characterised in that the pleochroic dye (54) is blue pleochroic dye blocking the transmission of light at wavelengths between 550 and 650 nanometers in the absence of the prescribed input, and the reflector means (34) is a fluorescent reflector.

4. The apparatus of any one of Claims 1 to 3 characterised in that the difference between the ordinary and extraordinary indices of refraction is between 0.23 and 0.30.

5. The apparatus of any one of Claims 1 to 3 characterised in that said liquid crystal material (18, 38) is operationally nematic liquid crystal material having a positive dielectric anisotropy.

6. A method of making a liquid crystal apparatus, comprising: forming a plurality of volumes (50) of a birefringent liquid crystal material (18, 38) and a pleochroic dye (54) that conforms to the structure thereof in a containment medium (56) such that the walls of said volumes (50) produce a distorted alignment of said liquid crystal material (18, 38) which in response to such alignment at least one of scatters and absorbs light and which in response to an electric field reduces the amount of such scattering or absorption wherein said volumes (50) have a size of between 0.5 and 2.5 microns and forming said containment medium (56) to have a thickness of between 8 and 18 microns, characterised by the steps of selecting said liquid crystal material (18, 38) such that the difference between its ordinary and extraordinary indices of refraction is greater than or equal to 0.23 and selecting the concentration of said pleochroic dye (54) in said liquid crystal material (18, 38) to be between 0.6% and 1.2%.

7. The method of Claim 6 characterised by the step of disposing a reflector means (34) on a non-viewing side of said containment medium (56).

8. The method of Claim 7 characterised in that the pleochroic dye (54) is blue pleochroic dye blocking the transmission of light at wavelengths between 550 and 650 nanometers in the absence of the prescribed input, and the reflector means (34) is a fluorescent reflector.

9. The method of any one of Claims 6 to 8 characterised in that the difference between the ordinary and extraordinary indices of refraction is between about 0.23 and 0.30.

10. The method of any one of Claims 6 to 8 characterised in that said liquid crystal material (18, 38) is operationally nematic liquid crystal material having a positive dielectric anisotropy.

**Patentansprüche**

1. Flüssigkristallvorrichtung
   - mit einem Einschlußmedium (56),
   - mit einem doppelbrechenden Flüssigkristallmaterial (18, 38), welches Licht entweder streut und/oder absorbiert und welches ansprechend auf eine vorgeschriebene Eingabe die Menge einer solchen Streuung oder Absorption verringert und
   - mit einer pleochroitischen Farbe (54), die in dem Flüssigkristallmaterial (18, 38) enthalten ist und die konform zu dessen Aufbau ist,
   - wobei das Flüssigkristallmaterial (38) in vielen Volumina (50) in dem Einschlußmedium (56) dispergiert ist,
   - wobei die Volumina (50) eine Größe von 0,5 bis 2,5 Mikron haben und
   - wobei die Dicke des Einschlußmediums (56) zwischen 8 und 18 Mikron beträgt,
   dadurch gekennzeichnet,
   - daß die Konzentration der Farbe (54) in dem Flüssigkristallmaterial (18, 38) zwischen 0,6 % und 1,2 % liegt und

- daß die Differenz zwischen dem ordentlichen und dem außerordentlichen Brechungsindex des Flüssigkristallmaterials (18, 38) größer als oder gleich 0,23 ist.

2. Vorrichtung nach Anspruch 1, gekennzeichnet durch eine Reflektoreinrichtung (34), die auf einer Nicht-Sicht-Seite des Einschlußmediums (56) angeordnet ist.

3. Vorrichtung nach Anspruch 2, dadurch gekennzeichnet, daß die pleochroitische Farbe (54) eine blaue pleochroitische Farbe ist, die den Durchgang von Licht bei Wellenlängen zwischen 550 und 650 nm bei Fehlen der vorgeschriebenen Eingabe sperrt, und daß die Reflektoreinrichtung (34) ein Fluoreszenzreflektor ist.

4. Vorrichtung nach einem der Ansprüche 1 bis 3, dadurch gekennzeichnet, daß die Differenz zwischen dem ordentlichen und dem außerordentlichen Brechungsindex zwischen 0,23 und 0,30 liegt.

5. Vorrichtung nach einem der Ansprüche 1 bis 3, dadurch gekennzeichnet, daß das Flüssigkristallmaterial (18, 38) ein funktionsmäßig nematisches Flüssigkristallmaterial ist, das eine positive dielektrische Anisotropie hat.

6. Verfahren zur Herstellung einer Flüssigkristallvorrichtung, welches das Ausbilden einer Vielzahl von Volumina (50) eines doppelbrechenden Flüssigkristallmaterials (18, 38) und einer pleochroitischen Farbe (54), die dessen Aufbau entspricht, in einem Einschlußmedium (56) umfaßt, derart, daß die Wände der Volumina (50) eine verdrehte Ausrichtung des Flüssigkristallmaterials (18, 38) erzeugen, das ansprechend auf eine solche Ausrichtung Licht streut und/oder absorbiert und das ansprechend auf ein elektrisches Feld den Betrag einer solchen Streuung oder Absorption reduziert, wobei die Volumina (50) eine Größe zwischen 0,5 und 2,5 Mikron haben und das Einschlußmedium (56) so formen, daß es eine Dicke zwischen 8 und 18 Mikron hat,
gekennzeichnet durch die Schritte
- Auswählen des Flüssigkristallmaterials (18, 38) derart, daß die Differenz zwischen seinem ordentlichen und außerordentlichen Brechungsindex größer als oder gleich 0,23 ist und
- Auswählen der Konzentration der pleochroitischen Farbe (54) in dem Flüssigkristallmaterial (18, 38) so, daß sie zwischen 0,6 % und 1,2 % liegt.

7. Verfahren nach Anspruch 6, gekennzeichnet durch den Schritt des Anordnens einer Reflektoreinrichtung (34) auf einer Nicht-Sicht-Seite des Einschlußmediums (56).

8. Verfahren nach Anspruch 7, dadurch gekennzeichnet, daß die pleochroitische Farbe (54) eine blaue pleochroitische Farbe ist, die den Lichtdurchgang bei Wellenlängen zwischen 550 und 650 nm bei Fehlen der vorgeschriebenen Eingabe sperrt, und daß die Reflektoreinrichtung (34) ein Fluoreszenzreflektor ist.

9. Verfahren nach einem der Ansprüche 6 bis 8, dadurch gekennzeichnet, daß die Differenz zwischen dem ordentlichen und dem außerordentlichen Brechungsindex zwischen etwa 0,23 und 0,30 liegt.

10. Verfahren nach einem der Ansprüche 6 bis 8, dadurch gekennzeichnet, daß das Flüssigkristallmaterial (18, 38) ein funktionsmäßig nematisches Flüssigkristallmaterial ist, das eine positive dielektrische Anisotropie hat.

**Revendications**

1. Dispositif à cristaux liquides comportant :
   un milieu de rétention (56), un cristal liquide biréfringent (18, 38) qui produit au moins l'une d'une diffusion et d'une absorption de lumière et qui, en réponse à une entrée prescrite, réduit la quantité de cette diffusion ou de cette absorption; et un colorant (64) pléochroïque contenu dans ledit cristal liquide (18, 38) qui s'adapte à la forme de ce dispositif; ledit cristal liquide (38) étant dispersé dans plusieurs volumes (50) dans ledit milieu (56) de rétention, dans lequel lesdits volumes (50) ont une taille de 0,5 à 2,5 microns, l'épaisseur dudit milieu de rétention (56) étant comprise entre 8 et 18 microns, caractérisé en ce que la concentration dudit colorant (54) dans ledit cristal liquide (18, 38) est comprise entre 0,6% et 1,2% et en ce que la différence entre les indices de réfraction ordinaire et extraordinaire dudit cristal liquide (18, 38) est supérieure ou égale à 0,23.

2. Dispositif selon la revendication 1, caractérisé par un moyen (34) réflecteur disposé d'un côté de non-observation dudit milieu de rétention (56).

3. Dispositif selon la revendication 2, caractérisé en ce que le colorant (54) pléochroïque est un colorant pléochroïque bleu bloquant la transmission de la lumière à des longueurs d'ondes comprises entre 550 et 650 nanomètres en l'absence de l'entrée prescrite, et en ce que le moyen (34) réflecteur est un réflecteur fluorescent.

4. Dispositif selon l'une quelconque des revendications 1 à 3, caractérisé en ce que la différence entre les indices de réfraction ordinaire et extraordinaire est comprise entre 0,23 et 0,30.

5. Dispositif selon l'une quelconque des revendications 1 à 3, caractérisé en ce que ledit cristal liquide (18, 38) est un cristal liquide fonctionnellement nématique ayant une anisotropie diélectrique positive.

6. Procédé de réalisation d'un dispositif à cristal liquide, comprenant : la formation d'un ensemble de volumes (50) constitués d'un cristal liquide biréfringent (18, 38) et d'un colorant pléochroïque (54) qui sont adaptés à la forme de la structure de ce dispositif dans un milieu de rétention (56) tel que les parois desdits volumes (50) produisent un alignement distordu dudit cristal liquide (18, 38) qui, en réponse à cet alignement, produit au moins l'une d'une diffusion et d'une absorption de la lumière et qui, en réponse à un champ électrique, réduit la quantité de cette diffusion ou de cette absorption, dans lequel lesdits volumes (50) ont une taille comprise entre 0,5 et 2,5 microns et forment ledit milieu (56) de rétention de façon qu'il ait une épaisseur comprise entre 8 et 18 microns, caractérisé par les étapes de sélection dudit cristal liquide (18, 38) de façon que la différence entre ses indices de réfraction ordinaire et extraordinaire soit supérieure ou égale à 0,23, et de sélection de la concentration dudit colorant (54) pléochroïque dans ledit cristal liquide (18, 38) pour qu'elle soit comprise entre 0,6% et 1,2%.

7. Procédé selon la revendication 6, caractérisé par l'étape consistant à disposer un moyen (34) réflecteur sur un côté de non-observation dudit milieu (56) de rétention.

8. Procédé selon la revendication 7, caractérisé en ce que le colorant pléochroïque (54) est un colorant pléochroïque bleu bloquant la transmission de la lumière à des longueurs d'ondes comprises entre 550 et 650 nanomètres en l'absence de l'entrée prescrite, et en ce que le moyen réflecteur (34) est un réflecteur fluorescent.

9. Procédé selon l'une quelconque des revendications 6 à 8, caractérisé en ce que la différence entre les indices de réfraction ordinaire et extraordinaire est comprise entre environ 0,23 et 0,30.

10. Procédé selon l'une quelconque des revendications 6 à 8, caractérisé en ce que ledit cristal liquide (18, 38) est un cristal liquide fonctionnellement nématique ayant une anisotropie diélectrique positive.

FIG. — 1

FIG. — 2

FIG. — 3

FIG. — 4

FIG. 5

FIG. 6

**Reflectance Spectrum NCAP Films**

E49 1.6μ MVD 16μ film
E49 3.2μ MVD 16μ film
E63 1.9μ MVD 15μ film
E63 3.2μ MVD 16μ film

1 - %Transmission

Wavelength (nm)

FIG. 7

Powered film

Unpowered film

Reflectivity (arbitrary units)

Wavelength (nm)

FIG. 8

15